Europäisches Patentamt

European Patent Office

Office européen des brevets

(11) Veröffentlichungsnummer: **0 175 147 B1**

# EUROPÄISCHE PATENTSCHRIFT

(45) Veröffentlichungstag der Patentschrift: **06.11.91**

(51) Int. Cl.⁵: **H04M 3/56**

(21) Anmeldenummer: **85110232.7**

(22) Anmeldetag: **15.08.85**

(54) **Digitale Konferenzschaltung.**

(30) Priorität: **17.08.84 US 641625**

(43) Veröffentlichungstag der Anmeldung:
**26.03.86 Patentblatt 86/13**

(45) Bekanntmachung des Hinweises auf die
Patenterteilung:
**06.11.91 Patentblatt 91/45**

(84) Benannte Vertragsstaaten:
**DE GB IT**

(56) Entgegenhaltungen:
**EP-A- 0 081 799**
**DE-A- 2 906 269**
**US-A- 3 699 264**

(73) Patentinhaber: **Alcatel N.V.**
**De Lairessestraat 153**
**NL-1075 HK Amsterdam(NL)**

(72) Erfinder: **Wurst, Walter Kenneth**
**5 Marlborough Road**
**Guelph Wellington Cty. Ontario(CA)**

(74) Vertreter: **Villinger, Bernhard, Dipl.-Ing. et al**
**Standard Elektrik Lorenz AG Patent- und Li-**
**zenzwesen Postfach 30 09 29**
**W-7000 Stuttgart 30(DE)**

## Beschreibung

Die Erfindung betrifft eine digitale Konferenzschaltung gemäß dem Oberbegriff des Patentanspruchs 1.

Digitale Konferenzschaltungen für digitale Nachrichtenvermittlungssysteme sind bekannt. Sie arbeiten entweder nach dem Summationsverfahren (U.S.-Patentschrift 4,416,007 D.D.Huizinga et al) oder nach dem "Lautester Sprecher" - Prinzip (U.S.-Patentschrift 3,699,264; S.G.Pitroda et al).

Das Summationsverfahren benötigt eine Vielzahl von Addierern und Subtrahierern.

Bei dem "Lautester Sprecher" - Prinzip wird ein digitaler Schwellendetektor verwendet, um den jeweils lautesten Sprecher zu bestimmen (U.S.-Patentanmeldung 427,970; D.B.Schuh). Dabei wird der lauteste Sprecher mit allen anderen Konferenzteilnehmern verbunden, während gleichzeitig das Signal des lautesten Sprechers nicht zu ihm selbst gelangen kann. Die Hauptschwierigkeit liegt beim Betreiben des Schwellendetektors. Dabei arbeitet die Konferenzschaltung dann zufriedenstellend, wenn die Hintergrundgeräusche auf allen Leitungen der Konferenzteilnehmer niedrig und die Pegel gleich sind. Wenn jedoch der Geräuschpegel einer oder mehrerer Leitungen ansteigt, kann eine Leitung die anderen Leitungen "unterdrücken", insbesondere dann, wenn eine der Leitungen einen Neidrigpegel führt. Außerdem kann ein ständiges Umschalten durch den Schwellendetektor die Folge sein. Weiterhin ist die Gesamtanzahl der gleichzeitig möglichen Konferenzschaltungen begrenzt.

Eine weitere nach dem "lautesten-Sprecher-Prinzip" arbeitende digitale Konferenzschaltung enthält einen ersten Codewandler, der nichtlinear codierte Sprachproben in linear codierte Sprachproben umsetzt, eine Addierschaltung, die über einen Teilsummen-Akkumulatorspeicher zurückgekoppelt ist, und einen zweiten Codewandler, der die Summenwerte wieder in nichtlinear codierte Sprachproben umsetzt. Um Verzerrungen zu vermeiden, werden die in einer Bewertungsschaltung als dem lautesten Teilnehmer zugehörigen Sprachproben ungedämpft und alle anderen Sprachproben mit einem vorgegebenen Wert gedämpft über den ersten Codewandler dem Addierer zugeführt (EP-A1-0 081 799).

Die technische Aufgabe gemäß der Erfindung besteht darin, eine digitale Konferenzschaltung zu realisieren, die auch dann zufriedenstellend arbeitet, wenn die Hintergrundgeräusche auf den Leitungen der Teilnehmer sehr unterschiedlich sind.

Eine Lösung dieser Aufgabe erfolgt nach der im Patentanspruch 1 angegebenen technischen Lehre.

Weitere vorteilhafte Ausbildungen des Gegenstandes der Erfindung sind den Unteransprüchen zu entnehmen.

Ein Ausführungsbeispiel der vorliegenden Erfindung wird anhand eines digitalen Zeitvielfach-Nalchrichtensystems beschrieben, welches 24 Sprachkanäle aufweist (Nord-Amerika und Japan-Norm).

Dieses weist einen 125 μsec Zeitrahmen auf, bei einer 8 KHz Abtastrate und einer 1,544 mBit/s Datenrate. Jeder 125 μsec Zeitrahmen enthält 193 Bit, je 24 mal 8-Bit Wörter (je ein Abtastwert jedes Kanales) und als 193-tes Bit ein Rahmentrennbit.

An einen 8-Bit PCM-Systembus SB mit 193 Zeitschlitzen werden Sprachkanalgruppen, je 24 Sprachkanäle, angeschlossen.

Jeder Gruppenrahmen besteht aus den ursprünglichen 24 mal 8-Bit Signalen, wobei jedes ein 8-Bit Zeitschlitz des PCM-Systembuses SB besetzt.

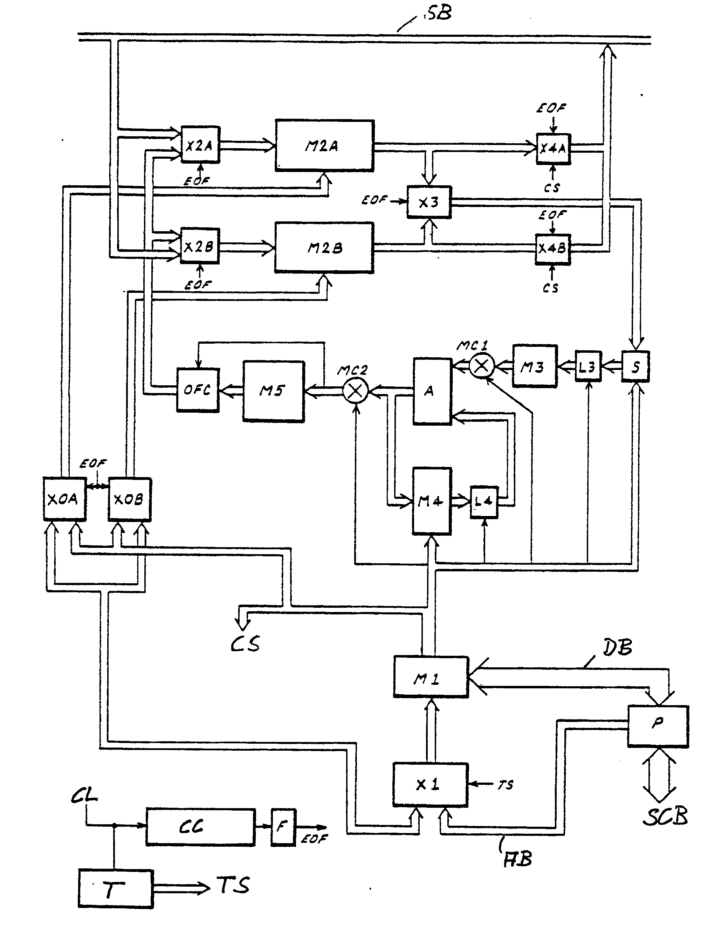

Wie in der einzigen Figur gezeigt, werden Konferenzteilnehmern zugeordnete PCM-Zeitschlitze, die über einen 193 mal 8 Bit PCM Systembus SB ankommen, in einen 193 mal 8 Bit Zeitschlitzzwischenspeicher M2 mit wahlfreiem Zugriff- im folgenden auch RAM M2 genannt - während eines Zeitrahmens abgespeichert. Gleichzeitig wird aus RAM M2 die resultierende Konferenzinformation, die aus dem Zeitrahmen stammt, der zwei Zeitrahmen vor dem jetzt ankommenden Zeitrahmen Liegt, in die abgehenden PCM-Zeitschlitze ausgelesen. Die ankommenden Kanäle werden während eines Zeitrahmens akkumuliert und während des nächsten Zeitrahmens verarbeitet, so daß das Ergebnis auf den PCM Systembus SB im folgenden Zeitrahmen wieder eingeblendet wird.

Der Zeitschlitzzwischenspeicher M2 ist gedoppelt in Form zweier Zwischenspeicher M2A, M2B mit wahlfreiem Zugriff ausgeführt, um Informationen ein- und auszublenden und um verarbeitete Information für abwechselnde Zeitrahmen in verschachtelter Weise zum Erzeugen eines Kontinuierlichen "Rahmen an Rahmen"-Signales abzuspeichern. Während des Ein-/Ausblendmodus ist RAM M2 an einen Kanalzähler CC angeschlossen, wodurch die Zeitschlitzlage um eine halbe Zeitschlitzperiode früher auftritt. Dies wird durch die Benutzung von Konferenz-Zeitsignalen TS erforderlich, da diese um einen Bruchteil einer Zeitschlitzperiode gegenüber einem Zeitschlitz verschoben sind. Somit können Informationen, entsprechend den dem RAM M2 zugeordneten Adressen, entweder in oder aus einem Zeitschlitz in ihrer richtigen Position ein- bzw. ausgeblendet werden.

Die Konferenz-Zeitsignale TS werden in einer Zeitgebereinheit T erzeugt, die mit einem Systemtakt CL getaktet wird.

EP 0 175 147 B1

Der Systemtakt CL ist außerdem an den Kanalzähler CC geführt.

Ein Kanalindexspeicher M1 - im folgenden auch RAM M1 genannt -, der z.B. durch einen Mikroprozessor gesteuert wird, bestimmt, ob es sich um einen ankommenden oder einen abgehenden Zeitschlitz handelt, in dem z.B. ein Kontrollbit des Ausgangssignales von RAM M1 überwacht wird (z.B. Bit 17 und Bit 18 eines 20-Bit Ausgangssignales). Der Kanalindexspeicher M1 enthält einen Ausgangsspeicher. Weiterhin werden über Schalter XOA und XOB die Zeitschlitzzwischenspeicher M2A bzw. M2B entweder durch den Kanalindexspeicher M1 bzw den Kanalzähler CC adressiert.

Während einer Konferenzschaltung werden die PCM-Konferenzsignale der beteiligten Teilnehmer verarbeitet, d.h. digital addiert, um ein zusammengesetztes Signal zu erhalten, das an alle Teilnehmer gesendet wird. Das zusammengesetzte Signal enthält jedoch keinen Anteil des Signales des Teilnehmers, zu dem es gesendet wird, wodurch ein Rückhöhren eliminiert wird.

Die Anzahl der benötigten Additionen einer Konferenzschaltung entspricht der Anzahl der Teilnehmerleitungen der Konferenzschaltung. Die Anzahl der internen Konferenz-Zeitschlitze je Addition entspricht der Anzahl der Teilnehmerleitungen. Somit ergibt sich die Gesamtanzahl benötigter Konferenz-Zeitschlitze aus dem Quadrat der Anzahl von Teilnehmerleitungen an der Konferenzschaltung.

Die verfügbare Anzahl von Konferenzen und die Anzahl von Teilnehmerleitungen je Konferenz wird nur durch die Anzahl N interner PCM Konferenz-Zeitschlitze begrenzt. Die Länge des internen Zeitrahmens der PCM Konferenz-Zeitschlitze entspricht der Länge des Zeitrahmens des PCM Systembusses SB. Die Gesamtanzahl von möglichen Vielfachgesprächen (Konferenzen) zur gleichen Zeit wird durch die Anzahl von Zeitschlitzen je Vielfachgespräch, die in die N verfügbaren Zeitschlitze eingefügt werden müssen, bestimmt. Diese internen Zeitschlitze bestimmen jedoch nicht die Kapazität des PCM Systembusses SB.

Wenn die Anzahl interner Zeitschlitze der Anzahl der Zeitschlitze des PCM-Systembusses SB angepaßt wird, z.B. 192 Zeitschlitze und ein Rahmentrennzeitschlitz, ergibt sich die maximale Anzahl von Konferenzen wie folgt:

| Teilnehmer je Konferenz | Zeitschlitze je Konferenz | Maximale Anzahl von Konferenzen | Benutzte Zeitschlitze | Unbenutzte Zeitschlitze |
|---|---|---|---|---|
| 3 | 9 | 21 | 189 | 3 |
| 4 | 16 | 12 | 192 | 0 |
| 5 | 25 | 7 | 175 | 17 |
| 6 | 36 | 5 | 180 | 12 |
| 7 | 49 | 3 | 147 | 45 |
| 8 | 64 | 3 | 192 | 0 |
| 9 | 81 | 2 | 162 | 30 |
| 10 | 100 | 1 | 100 | 92 |
| 11 | 121 | 1 | 121 | 71 |
| 12 | 144 | 1 | 144 | 48 |
| 13 | 169 | 1 | 169 | 23 |

Eine Vielzahl von Kombinationen sind möglich. Z.B. eine Zwölfer-Konferenz, eine Fünfer-Konferenz und zwei Dreier-Konferenzen zur gleichen Zeit.

Die Umwandlung der Konferenzsignale in und aus einer Linearen Form erfolgt mittels zweier Wandlerspeicher. Dazu werden die von jeder Konferenzteilnehmerleitung über entsprechende, nach dem "$\mu$-law" Standard (d.h. die Signale sind entsprechend einer natürlichen Logarithmusfunktion ln (x) Komprimiert) arbeitende CODEC's ankommende 8-Bit PCM-Signale zunächst von einem 8-Bit "$\mu$-law" PCM-Signal, das aus einem 7-Bit Wert und einem Vorzeichenbit besteht, in ein lineares 12-Bit Zweierkomplement-Signal gewandelt. Diese Wandlung erfolgt in einem programmierbaren 256 mal 12-Bit Nur-Lesespeicher (PROM) M3, mittels einer abgespeicherten Wandlertabelle.

Das lineare PCM-Signal wird nun durch einen 16-Bit Addierer A zu dem Ergebnis der vorangegangenen Addition, das in einem indizierten 64 $\times$ 16 Bit Teilsummen-Akkumulatorspeicher M4 abgespeichert ist, hinzuaddiert. Da in dem Ergebnis der Wert und das Vorzeichen enthalten sind, kann eine Addition oder Subtraktion durch den Addierer A durch einfache Zweierkomplement-Rechnung ausgeführt werden. Der 16-Bit Addierer A wird benutzt, um die notwendige Auflösung für die lineare 12-Bit Zweierkomplement-Darstellung zu erhalten. Die zusätzlichen Bits werden dazu benutzt, um einen positiven oder negativen Überlauf anzeigen zu können. Der Index entspricht der Teilnehmerleitung, für die eine Addition ausgeführt wird. Die Kapazität des RAM M4 ist auf 64 begrenzt, da nicht mehr als 63 Leitungen in Konferenzen zur gleichen Zeit beteiligt sein können (dies entspricht dem Fall: 21 mal Dreier-Konferenzen).

3

EP 0 175 147 B1

Das Additionsergebnis des 16-Bit Addierers A wird im RAM M4 als Zwischensumme abgespeichert und gleichzeitig von 12-Bit linear in 8-Bit "$\mu$-law", entsprechend einer in einem 4 kBit $\times$ 8-Bit Nur-Lesespeicher M5 abgelegten Wandlertabelle, umgewandelt. Des Ausgangssignal des Nur-Lesespeichers M5 wird über eine Überlaufkorrektureinheit OFC geführt, die eine Verzerrung von zyklisch zusammengesetzter Signale großer Amplitude (hoher Lautstärke) verhindert.

Wie bereits gesagt, werden ein negativer oder positiver Überlauf durch zusätzliche Bits des Addierers A angezeigt. Entsprechen z.B. die Kombiantionen 00 und 11 den normalen Bedingungen des 14-ten bzw. des 13-ten Bits für positive und negative Werte, so wird ein positiver und negativer Überlauf detektiert, wenn diese Bits die Werte 01 bzw. 10 annehmen.

Tritt nun ein Überlaufzustand ein, wird ein für den "$\mu$-law" Code entsprechender Maximalwert, mit dem entsprechenden Vorzeichenbit, durch die Überlaufkorrektureinheit OFC anstelle des Überlaufwertes zur Wandlug eingesetzt. Somit vermeidet die Überlaufkorrektureinheit OFC übermäßige Verzerrungen, wenn während der Summation von vielen gleichzeitig auftretenden hohen Signalamplituden der Additionsbereich überschritten wird.

Das Ausganssignal der Überlaufkorrektureinheit OFC wird im RAM M2 abgespeichert und dem richtigen Zeitschlitz zugeführt, wobei ein Überschreiben für jede Addition erfolgt.

Der Arbeitsablauf für jede Konferenz, wobei ein interner Konferenz-Zeitschlitz he Arbeitsablauf benötigt wird, wird im folgenden geschildert:

a) ein adressierter Speicherplatz in Teilsummern-Akkummulatorspeicher M4 wird für jede an der Konferenz teilnehmenden Leitung bereitgestellt und auf den Wert Null gesetzt. Dies erfolgt deshalb, da beim Rücksetzen die Signalspeicher L3 und L4 auf den Wert Null gesetzt werden, so daß zu jedem Speicherplatz der Wert Null addiert wird. Es werden zwei Bit des Ausgangssignales des Kanalindexspeichers M1, z.B. Bit 19 und Bit 20, zum Zurücksetzen der Signalspeicher L3, L4 benutzt;

b) jeder durch eine Adresse einer Teilnehmerleitung zugeordnete Speicherplatz wählt nun alle Teilnehmerleitungen, außer der eigenen Teilnehmerleitung an, um zyklisch jedes Teilnehmersignal zu seinem jeweiligen Wert aufzuaddieren und abzuspeichern, wobei mit jeder Addition der Inhalt der Speicherplätze erneuert wird. Gleichzeitig wird der sich ergenbende "$\mu$-law" Wert in den den teilnehmerleitungen entsprechend zugeordneten Speicherplätzen des Zeitschlitzzwischenspeichers M2 abgespeichert.

Nachdem der zuvor beschriebene Ablauf für jeden Speicherplatz am Ende eines Zeitrahmens ausgeführt ist, enthält das RAM M3 das in "muG-law" codierte resultierende Signal für jeden Teilnehmer, indiziert durch den Kanalindexspeicher M1. Die resultierenden Signale werden über den Kanalindexspeicher M1 während des nächsten Zeitrahmens in die richtigen Zeitschlitze auf den PCM-systembus SB eingeblendet.

Schalter X2A und X2B erlauben es dabei, daß die Zeitschlitzzwischenspeicher M2A bzw. M2B nicht verarbeitete Konferenzsignale aus dem PCM-Systembus SB auslesen oder verarbeitete Konferenzsignale aus der Konferenzschaltung erhalten.

Ein Schalter X3 erlaubt das Auslesen aus dem RAM M2A oder RAM M2B zur Konferenzschaltung.

Eine Zeitrahmeneinheit F erzeugt ein Rahmenendesignal EOF welches zum Steuern der Schalter XOA, XOB, X2A und X2B und X3 so verwendet wird, daß eine Signalverarbeitung und ein Ein- und Ausblenden der Signale gleichzeitig erfolgt.

Weitere Schalter X4A und X4B ermöglichen das aus dem Zeitschlitzzwischenspeichern M2A bzw. M2B kommende resultierende Konferenzsignal gesteuert auf den PCM-Signalbus SB einzublenden.

Diese Schalter X4A und X4B werden durch ein Steuerbit CS des Ausgangssignales des Kanalindexspeichers M1, z.B. Bit 18, und durch das Rahmenendesignal EOF gesteuert.

Um ein Vergrößern oder ein Verkleinern der Anzahl von Teilnehmerleitungen während eines Konferenzgespräches zu erleichtern, werden die Adressen und Speicherplätze im RAM M4 aufgrund einer mit dem Zeitschlitz eins beginnenden Anfrage zugeordnet und auf Null gesetzt.

Die Additionen werden innerhalb von Zeitschlitzen durchgeführt, die am Ende des internen Konferenz-Zeitschlitzrahmens Liegen, so daß die Zuordnung solcher Zeitschlitze umso schneller erfolgt, je mehr Teilnehmer hinzugefügt werden.

Der Kanalindexspeicher M1 ermöglicht die Zuordnung durch Steuerung der Adressierung des Zeitschlitzzwischenspeichers M2.

Somit kann die Größe der Konferenzen beliebig geändert werden und neue Konferenzen können mit unterschiedlichen Größen hinzugefügt oder abgebaut werden ohne daß die anderen Konferenzen gestört werden.

Eine Steuereinheit P, z.B. ein Mikroprozessor wird zur Steuerung der Zeitschlitze, die durch den Kanalindexspeicher M1 adressiert werden, verwendet.

Die Steuereinheit P ist an einen Systemsteuerbus SCB angeschlossen und über einen Datenbus DB mit dem Kanalindexspeicher M1 sowie über einen Adressenbus AB mit einem Schalter X1 verbunden.

4

Dabei wird der Kanalindexspeicher M1 Über den Schalter X1 entweder durch die Steuereinheit P oder durch den Kanalzähler CC adressiert. Der Schalter X1 wird durch die Konferenz-Zeitsignale TS gesteuert.

Hintergrundgeräusche werden während der Addition von Signalen der Konferenzteilnehmer durch das Auswählen von modifizierten "μ-law" zu linear Wandlertabellen, die als Überlagerungsbereiche in dem Nur-Lesespeicher M3 abgespeichert sind, reduziert.

Dabei verringern verschiedene Überlagerungen im Nieder-Pegelbereich der "μ-law"-Kurve den Additionseffekt der Hintergrundgeräusche. Solche unterschiedliche Überlagerungen sind für verschiedene Größen von Konferenzen verfügbar. Somit können Geräuschreduktionsfaktoren je Konferenz ausgewählt werden und entsprechend der Änderung der Anzahl von Teilnehmern dynamisch angepaßt werden.

Unterschiedliche Überlagerungen können dem Nur-Lesespeicher M3 zugeführt werden, wobei eine die normale "μ-law"-Kurve betrifft und andere verschiedene Werte für die Niederpegel-Geräuschreduktion betreffen, die außerdem die Verzerrung des resultierenden Signales minimieren.

Wird z.B. die Kapazität des Nur-Lesespeichers M3 von 256 × 12 Bit auf 512 × 12 Bit erweitert, so können vier 64-Bit Niederpegel-Überlagerungen verwendet werden.

Die Auswahl erfolgt über eine Überlagerungsauswahleinheit S, die durch einen Überlagerungsauswahlenteil des Ausgangssignales des Kanalindexspeichers M1 gesteuert wird.

Entsprechend den von dem Zeitschlitzzwischenspeicher M2 zugeführten Signal, ergibt das Ausgangssignal der Überlagerungsauswahleinheit S die Adresse des ausgewählten Überlagerungsbereiches im Nur-Lesespeicher M3.

Es werden zwei Multipliziereinheiten MC1 und MC2 zum Einstellen des Pegels von Niedrigpegelsignalen verwendet. Die Pegel auf diese "Niedrigpegel"-Leitungen können um z.B. +12, +6, -6, oder -12DB vergrößert oder verkleinert werden, in dem Pegelumsetzeinheiten verwendet werden.

Der Signalpegel wird durch Steuerbits des Ausgangssignales des Kanalindexspeichers M1 leitungsindividuell gesteuert, wodurch die Verstärkung in gewünschter Weise eingestellt werden kann. Dadurch können die Pegel auf Leitungssätzen entsprechend den Pegeln von Ortsvermittlungsstellen verkleinert werden, um mehr ausgeglichene Pegel für Signale mit unterschiedlicher Schleifendämpfung zu erhalten.

Die Multipliziereinheiten MC1, MC2 werden eingesetzt, um die Verstärkung von ausgewählten einzelnen Teilen der Konferenzsignale und um die Gesamtverstärkung der ausgewählten resultierenden Konferenzsignale zu ändern.

Die gesamte Anordnung kann in einfacher Weise zum Verarbeiten von Signalen nach dem "A-law" Code, d.h. nach einer logarithmischen Kennlinie, abgeändert werden, in dem die Nur-Lesespeicher M3, M5 entsprechende Wandlertabellen nach dem "A-law"-Code erhalten. Andere Sprachcodierungsvorschriften können in entsprechender Weise eingeführt werden.

Die Konferenzkapazität kann durch ein Vergrößern der Anzahl der internen Konferenz-Zeitschlitze pro Zeitrahmen vergrößert werden (z.B. durch das Verwenden der europäischen Zeitrahmennorm).

Weiterhin können z.B. durch Verdoppeln der Zeitschlitze, hier 384 Zeitschlitze, eine Neunzehner-Konferenz und zwei Dreier-Konferenzen gleichzeitig ermöglicht werden. Die Konferenzkapazitäten können auch durch andere Mittel zum Akkumulieren erhöht werden, die ein gleichzeitiges Nullsetzen aller Speicherplätze ermöglichen müßten. Dies würde solche Zeitschlitze freigeben, die zum Nullsetzen benutzt werden.

**Patentansprüche**

1. Digitale Konferenzschaltung mit Speicher (M3, M4, M5) und Addierer (A) für ein Nachrichtenvermittlungssystem, wobei der Addierer (A) zum Verbinden der Konferenzsignale über einen Teilsummen-Akkumulatorspeicher (M4) zurückgekoppelt ist und wobei zum Wandeln der von den Teilnehmern stammenden Konferenzsignale in und aus einer linearen Form Nur-Lesespeicher (M3, M5) mit je einer abgespeicherten Umwandlungstabelle dem Addierer (A) vor- bzw. nachgeschaltet sind,
**dadurch gekennzeichnet,** daß in dem vorgeschalteten Nur-Lesespeicher (M3) eine Vielzahl von modifizierten, Überlagerungsbereiche bildenden, Umwandlungstabellen abgespeichert sind und daß zur Hintergrundgeräuschreduktion eine Überlagerungsauswahleinheit (S), die mit einem durch eine Steuereinheit (P) gesteuerten Kanalindexspeicher (M1) verbunden ist, mit dem vorgeschalteten Nur-Lesespeicher (M3) verbunden ist, um entsprechend einem Überlagerungsauswahlanteil des Ausgangssignales des Kanalindexspeichers (M1) leitungsindividuell die Auswahl der modifizierten Umwandlungstabellen zu steuern.

2. Digitale Konferenzschaltung nach Anspruch 1, dadurch gekennzeichnet, daß je eine Multipliziereinheit (MC1, MC2) zwischen die Nur-Lesespeicher (M3, M5) und den Addierer (A) geschaltet sind, um die Signalpegel jedes der Konferenzsignale einzustellen.

3. Digitale Konferenzschaltung nach Anspruch 2, dadurch gekennzeichnet, daß die Multipliziereinheiten (MC1, Mc2) zum Einstellen der Signalpegel Pegelumsetzeinheiten aufweisen, durch die die Signalpegel mit fest vorgegebenen Dämpfungswerten multipliziert werden.

4. Digitale Konferenzschaltung nach Anspruch 1, dadurch gekennzeichnet, daß der Teilsummen-Akkumulatorspeicher (M4) zum Zuordnen der Konferenzsignale zu zugehörigen internen Konferenz-Zeitschlitzen mit dem Kanalindexspeicher (M1) verbunden ist, der durch eine Steuereinheit (P) gesteuert wird.

5. Digitale Konferenzschaltung nach Anspruch 1, dadurch gekennzeichnet, daß die Konferenzteilnehmer über einen PCM-Systembus (SB) untereinander verbunden sind, daß einerseits zum Ausblenden der auf dem PCM-Systembus (SB) ankommenden Konferenzsignale ein Zeitschlitzzwischenspeicher (M2) zwischen den PCM-Systembus (SB) und über den vorgeschalteten Nur-Lesespeicher (M3) an den Addierer (A) angeschlossen ist und daß andererseits der Zeitschlitzzwischenspeicher (M2) zum Einblenden der verbundenen Konferenzsignale auf den PCM-Systembus (SB) zwischen diesen und dem nachgeschalteten Nur-Lesespeicher (M5) geschaltet ist.

6. Digitale Konferenzschaltung nach Anspruch 5, dadurch gekennzeichnet, daß der Zeitsschlitzzwischenspeicher (M2) aus zwei Zwischenspeichern (M2A, M2B) mit wahlfreiem Zugriff besteht.

7. Digitale Konferenzschaltung nach Anspruch 1, dadurch gekennzeichnet, daß der mit dem Teilsummen-Akkumulatorspeicher (M4) verbundene Addierer (A) jedes nicht akkumulierte Konferenzsignal zu der bereits akkumulierten Teilsumme der Konferenzsignale im Teilsummen-Akkumulatorspeicher (M4) hinzuaddiert, wobei der Addierer (A) nach dem Zweierkomplement-Verfahren arbeitet.

8. Digitale Konferenzschaltung nach Anspruch 1, dadurch gekennzeichnet, daß eine Überlaufkorrektureneinrichtung (OFC) zum Berichtigen der verbundenen Konferenzsignale beim Auftreten eines Summationsüberlaufes dem nachgeschalteten Nur-Lesespeicher (M5) zugeordnet ist.

**Claims**

1. A digital conference circuit with memory means (M3, M4, M5) and an adder (A) for a communication system, wherein said adder (A) has feedback connection via a partial-sum accumulator random access memory (RAM) (M4) and wherein, for converting the conference signals coming from the participants into and from a linear form, read-only memories (M3, M5) each with a stored conversion table, are connected preceding and following, respectively, said adder (A),
   **characterized in** that a plurality of modified conversion tables forming overlay sections are stored in said preceding read-only memory (M3) and that, for reducing background noise, an overlay selection unit (S), which is connected to a channel indexing memory (M1) controlled by a control unit (P), is connected to the preceding read-only memory (ROM) (M3) in order to control the per-line selection of the modified conversion tables in accordance with an overlay selection portion of the output signal of the channel indexing memory (M1).

2. A digital conference circuit as claimed in Claim 1, characterized in that a multiplier unit (MC1, MC2) is connected between each read-only memory (M3, M5) and the adder (A) in order to set the signal level of each of the conference signals.

3. A digital conference circuit as claimed in Claim 2, characterized in that the multiplier units (MC1, MC2) comprise, for setting the signal levels, level conversion units by which the signal levels are multiplied by specifically predetermined attenuation values.

4. A digital conference circuit as claimed in Claim 1, characterized in that the partial-sum accumulator memory (M4) is connected, for assigning the conference signals to associated internal conference time slots, to the channel indexing memory (M1), which is controlled by a control unit (P).

5. A digital conference circuit as claimed in Claim 1, characterized in that the conference participants are interconnected via a PCM system bus (SB), that on the one hand, for extracting the conference signals incoming on the PCM system bus (SB), a time slot buffer RAM (M2) is connected between the PCM system bus (SB) and via the preceding ROM (M3) to the adder (A) and that on the other hand the time

6

slot buffer RAM (M2) is connected, for inserting the associated conference signals to the PCM system bus (SB), between the latter and the following read-only memory (ROM) (M5).

6. A digital conference circuit as claimed in Claim 5, characterized in that said time slot buffer RAM (M2) consists of two buffer RAMs (M2A, M2B).

7. A digital conference circuit as claimed in Claim 1, characterized in that the adder (A) associated with the partial-sum accumulator RAM (M4) adds every unaccumulated conference signal to the already updated partial sum of the conference signals in the partial-sum accumulator RAM (M4), with the adder (A) operating by the twos-complement method.

8. A digital conference circuit as claimed in Claim 1, characterized in that an overflow correction device (OFC) for correcting the associated conference signals in the event of the occurrence of a summing overflow is assigned to the following read-only memory (M5).

**Revendications**

1. Circuit de conférence numérique à mémoires (M3, M4, M5) et additionneur (A) destiné à un système de transfert de messages, dans lequel l'additionneur (A) servant à combiner les signaux de conférence est rétrocouplé à un registre-accumulateur de sous-totaux (M4) et dans lequel des mémoires mortes (M3, M5) avec chacune une table de conversion mémorisée sont montées en amont et en aval de l'additionneur (A) pour la conversion sous une forme linéaire des signaux de conférence provenant des locuteurs *caractérisé en ce que* de nombreuses tables de conversion modifiées, formant des zones de recouvrement, sont enregistrées dans la mémoire morte (M3) montée en amont et *en ce que*, pour la réduction du bruit de fond, une unité de sélection du recouvrement (S), qui est reliée à une mémoire des indices de canaux (M1) commandée par une unité de commande (P), est reliée à la mémoire morte (M3) montée en amont pour commander individuellement à chaque ligne la sélection des tables de conversion modifiées conformément à un facteur de sélection de recouvrement du signal de sortie de la mémoire des indices de canaux (M1).

2. Circuit de conférence numérique selon la revendication 1 *caractérisé en ce que* des unités de multiplication (MC1, MC2) sont respectivement intercalées entre les mémoires mortes (M3, M5) et l'additionneur (A) pour régler le niveau de chacun des signaux de conférence.

3. Circuit de conférence numérique selon la revendication 2 *caractérisé en ce que* les unités de multiplication (MC1, MC2) pour le réglage du niveau des signaux comprennent des unités de conversion de niveau assurant la multiplication des niveaux des signaux par des valeurs d'affaiblissement définies de manière fixe.

4. Circuit de conférence numérique selon la revendication 1 *caractérisé en ce que* le registre-accumulateur de sous-totaux (M4) servant à l'affectation des signaux de conférence aux intervalles de temps de conférence internes correspondants est relié à la mémoire des indices de canaux (M1) qui est commandée par une unité de commande (P).

5. Circuit de conférence numérique selon la revendication 1 *caractérisé en ce que* les locuteurs sont reliés entre eux par un bus de système MIC (SB), *en ce qu'*une mémoire tampon des intervalles de temps (M2) est raccordée entre le bus de système MIC (SB) et à l'additionneur (A) via la mémoire morte (M3) montée en amont pour extraire les signaux de conférence arrivant sur le bus de système MIC (SB) d'une part et *en ce que* la mémoire tampon des intervalles de temps (M2) est raccordée entre le bus de système MIC (SB) et la mémoire morte (M5) montée en aval pour injecter les signaux de conférence combinés sur le bus de système MIC (SB).

6. Circuit de conférence numérique selon la revendication 5 *caractérisé en ce que* la mémoire tampon des intervalles de temps (M2) se compose de deux mémoires tampon (M2A, M2B) à accès sélectif.

7. Circuit de conférence numérique selon la revendication 1 *caractérisé en ce que* l'additionneur (A) relié au registre-accumulateur de sous-totaux (M4) ajoute chaque signal de conférence non accumulé au sous-total des signaux de conférence déjà accumulé dans le registre-accumulateur de sous-totaux (M4), l'additionneur (A) travaillant selon la méthode du complément à deux.

8. Circuit de conférence numérique selon la revendication 1 *caractérisé en ce qu*'un dispositif de correction de débordement est affecté à la mémoire morte (M5) montée en aval (OFC) pour la correction des signaux de conférence combinés en cas d'apparition d'un débordement de sommation.